# EUROPEAN PATENT APPLICATION

(11) **EP 4 848 837 A1**
(43) Date of publication of application: **02.12.2026**
(21) Application number: 26180133.6
(22) Date of filing: 21.05.2026
(51) Int. Cl.: H04W 52/02

(54) **MANAGEMENT OF TERMINAL DEVICE IN WIRELESS COMMUNICATION NETWORK**

(30) Priority: 26.05.2025 FI 20253208
(71) Applicant: Telia Company AB, 169 94 Solna (SE)
(72) Inventor: JALKANEN, Tero, 04300 TUUSULA (FI); SARAJISTO, Tomi, 00790 HELSINKI (FI)
(74) Representative: Berggren Oy

(57) **Abstract**

A method for managing a terminal device (120) is provided, the method performed by a network node (600), comprises: receiving (210) data indicative of that at least a portion of the wireless communication network (110) is set to apply a power saving mode; generating (220) a notification towards a terminal device (120) to indicate that at least the portion of the wireless communication network (110) is set to apply the power saving mode; receiving (230) an acknowledgement from the terminal device (120); and storing (240) data identifying the terminal device (120) that acknowledged the receipt of the notification, the data is stored to data storage. Also, a network node (600) and a computer program are provided to.

## Description

### TECHNICAL FIELD

The invention concerns in general the technical field of telecommunications. More particularly, the invention concerns a management of a terminal device in wireless communication networks.

### BACKGROUND

Wireless communication networks (for example fourth generation (4G), fifth generation new radio (5G NR), 5G non-stand alone (NSA), sixth generation (6G)) are complex systems which consume a lot of energy. In order to tackle the energy consumption, the wireless communication networks are provided with a functionality to save energy and a term power-saving mode (PSM) refers to this. In the power-saving mode the wireless communication network is controlled to even shut-down portions of a core network and/or a radio network. Such operations may e.g. comprise temporality disabling a part of radio transmitters in a base station and/or lowering their power output. In the core network side corresponding actions may be setting of a number of servers into sleep/standby mode. Triggering factors may e.g. be a low number of users, i.e. terminal devices, to be served, but the application of the power-saving mode may also be scheduled, i.e. it is set active in accordance with a predefined schedule in terms of time. Also, a location may also be applied as another factor especially when it comes to the radio network side.

The application of the power-saving mode can lead into a situation where users get inferior service, as the device or applications in it cannot know in advance whether or not the wireless communication network is to be set to the power-saving mode. This naturally may generate unsatisfaction in the customers and that is undesirable situation from the operator point of view.

Thus, there is room for introducing solutions to improve the situation.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An object of the invention is to present a method, a network node and a computer program for managing a terminal device.

The objects of the invention are reached by a method, a network node and a computer program as defined by the respective independent claims.

According to a first aspect, a method for managing a terminal device in a wireless communication network is provided, the method performed by a network node of the wireless communication network, comprises:
receiving data indicative of that at least a portion of the wireless communication network is set to apply a power saving mode,

generating a notification to a terminal device served at least in part by at least the portion of the wireless communication network, the notification comprising data indicative of that at least the portion of the wireless communication network is set to apply the power saving mode,
receiving an acknowledgement from the terminal device, the terminal device acknowledging a receipt of the notification,
storing data identifying the terminal device that acknowledged the receipt of the notification, the data is stored to data storage.

The notification to the terminal device may be generated with one the following: a session management signaling; a user plane signaling. For example, the session management signaling may be generated over a mobility management entity of the wireless communication network. On the other hand, the user plane signaling may be performed through an application server communicatively connected to the wireless communication network. For example, data descriptive of the power saving mode applied in the at least portion of the wireless communication network is provided to the application server through a network exposure entity.

The method may further comprise:
inquiring, from the data storage, in response to receiving data indicative of that at least the portion of the wireless communication network is set to apply a normal power consumption mode, data descriptive of terminal devices being affected of setting at least the portion of the wireless communication network to the power saving mode.

Moreover, the method may further comprise:
generating, in response to receiving data indicative of that at least the portion of the wireless communication network is resumed to the normal power consumption mode from the power saving mode, a resume notification to the terminal device identifiable from the data stored.

Moreover, the notification may be generated by adding further data in the notification received by the network node, the further data defining a number of radio frequency bands impacted by the power saving mode.

The method may further comprise:
detecting that a terminal device enters a service area of the wireless communication network being affected by the setting of at least the portion of the wireless communication network to the power saving mode, and performing the step of generating, the step of receiving and the step of storing according to the first aspect as defined above with respect to the terminal device detected to enter the service area.

The method may also comprise:
detecting that the terminal device identified in the data storage exits the service area of the wireless communication network being affected by the setting of at least the portion of the wireless communication network to the power saving mode, and
generating a resume notification to the terminal device detected to be exited the service area.

According to a second aspect, a network node for managing a terminal device in a wireless communication network is provided, the network node of the wireless communication network is configured to execute the steps of the method according to the first aspect as defined above.

According to a third aspect, a computer program is provided, the computer program comprising instructions to cause the network node according to the second aspect as defined above to execute the steps of the method according to the first aspect as defined above.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically a communication system according to an example.
Figure 2 illustrates schematically a method according to an example.
Figure 3 illustrates schematically various signaling paths according to an example.
Figure 4 illustrates schematically further aspects in relation to a method according to an example.
Figure 5 illustrates schematically a flow chart according to an example.
Figure 6 illustrates schematically a system according to an example.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

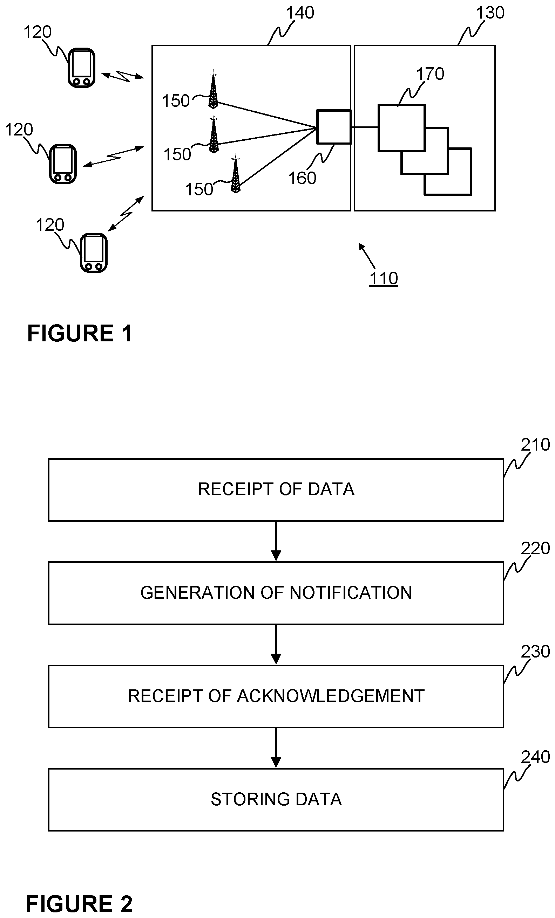

Figure 1 illustrates schematically a communication system into which the present invention is implementable. The communication system comprises a wireless communication network 110 and one or more terminal devices 120 that communicative wirelessly utilizing services provided by the wireless communication network. The wireless communication network 110 may consist of a core network (CN) 130 and a radio access network (RAN) 140. The RAN 140 may be implemented to comprise RAN nodes 150 capable of providing wireless communication service to the terminal devices 120 with one or more radio access technologies wherein the RAN nodes 150 shall be understood as base stations in accordance with this example. Thus, the RAN node 150, and the base station, may also be called as an access point of a wireless communication network 110. The RAN node 150 may be, for example, a base station for 5G, also called New Radio (NR). In 5G, the RAN node 150 may be a NG-RAN node, which is defined as either a gNB (a next generation NodeB) or an ng-eNB. A gNB is a node providing NR user plane and control plane protocol terminations towards the terminal devices 120. The RAN nodes 150 may be connected e.g. through an interface node 160 to the core network 130 wherein the interface node 160 may also comprise functionalities for controlling an operation of the RAN nodes 150 or such functionalities may be arranged in the RAN nodes 150.

As such, the base stations 150 includes one or more processors, one or more memories, one or more network interfaces, and one or more transceivers interconnected through one or more communication channels. Each of the one or more transceivers includes a receiver, Rx, and a transmitter, Tx. The one or more transceivers are connected to one or more antennas. The one or more memories include computer program code.

Moreover, the wireless communication network 110 may include a network element or elements 170 that may include core network 130 functionality, and which provides connectivity via a link or links with a further network, such as a telephone network and/or a data communications network (e.g., the Internet). Such core network functionality for 5G may include location management functions (LMF(s)) and/or access and mobility management function(s) (AMF(S)) and/or user plane functions (UPF(s)) and/or session management function(s) (SMF(s)). Such core network functionality for LTE may include MME (Mobility Management Entity)/SGW (Serving Gateway) functionality. These are merely example functions that may be supported by the network element(s) 170, and it may also be arranged that both 5G and LTE functions might be supported. The RAN nodes 150 are communicatively connected over a link to one or more network elements 170 of the core network 130 e.g. through the interface node 160. The link may be implemented as, e.g., an NG interface for 5G, or an S1 interface for LTE, or other suitable interface for other standards. The network element 170 includes one or more processors, one or more memories, and one or more network interfaces (N/W I/F(s)), interconnected through one or more communication channels. The one or more memories include computer program code. The one or more memories and the computer program code are configured to, with the one or more processors, cause the network element 170 to perform one or more operations as described herein.

Next, at least some aspects in relation to the present invention are described by referring to Figure 2. Figure 2 illustrates schematically a method for managing a terminal device 120 in a wireless communication network 110. The method is performed by a network node of a wireless communication network 110, such as the network node residing in a core network 130 of the wireless communication network, configured to participate to network management operations at least in part. Therefore, the entity performing the method is called as a network management entity for the purpose of describing the present invention further. An example of the network management entity configurable to perform the method may be the Session Management Function (SMF). Specifically speaking, the method for managing the terminal device 120 in the wireless communication network 110 relates to a situation in which operations with respect to a power saving are performed wherein the operations may refer to an activation and inactivation at least a portion of the wireless communication network 110 wherein the activation and/or inactivation may affect a service capability of the wireless communication network 110.

First, the network management entity receives 210 data that comprise information indicative of that at least a portion of the wireless communication network 110 is set to apply a power saving mode. This may refer to an approach that an entity in the wireless communication network 110 is configured to, e.g. in response to an automatic operation or manual operation, to set a portion of the wireless communication network 110 to a power saving mode. The portion of the wireless communication network 110 may refer to entities in a radio access network 140 and/or in the core network 130. In practice, this may mean that in the radio access network 140 a half of the radio transmitters in one or more RAN nodes 150 are closed down and/or their power output is lowered whereas in the core network 130 a number of servers handling core network nodes may be set into sleep/standby mode. The data received 210 by the network management entity may define various aspects in relation to the power saving mode, such as location information of the affected portion(s) of the network 110 and so on. For avoidance of doubt, it is worthwhile to mention that the network management entity may receive 210 the data from an entity that have access to data descriptive of the above-described aspects of the power saving mode and the network management entity itself may be involved in the activation and/or inactivation of the power saving mode in one or more portions of the wireless communication network 110 and, therefore, is able to receive 210 the data from internal operations.

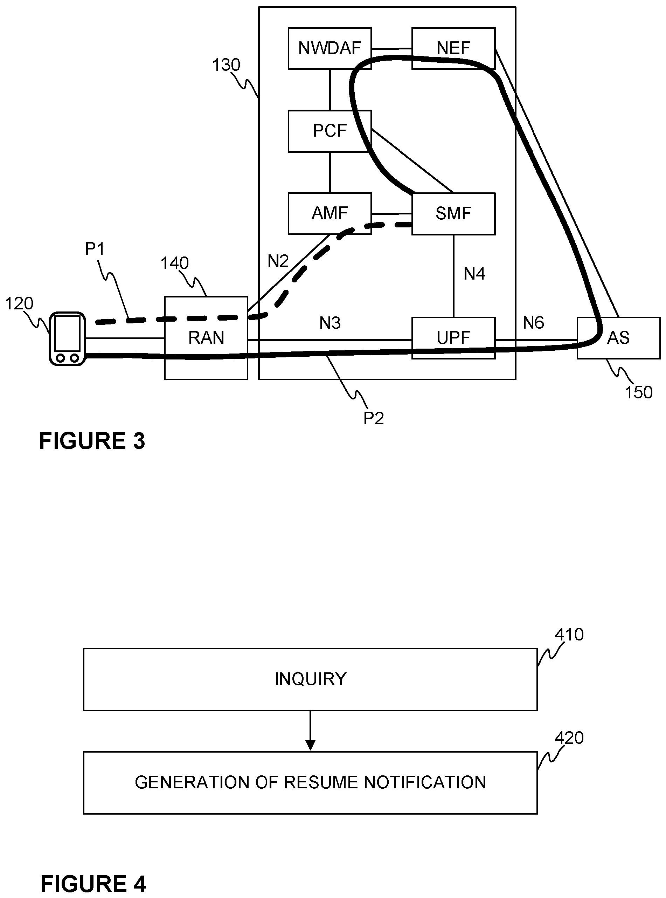

In response to the receipt 210 of the data descriptive of the application of the power saving mode in the wireless communication network 110 as described the network management entity is configured to generate 220 a notification to a terminal device 120 served at least in part by at least a portion of the wireless communication network 110 wherein the notification comprises data indicative of that at least the portion of the wireless communication network 110 is set to apply the power saving mode. In accordance with the present invention the notification may be generated 220, and thus delivered, to the terminal device 120 in various manners, i.e. over various signaling paths. Figure 3 illustrates examples of various signaling paths for the notifications applicable in accordance with various embodiments. A first possible signaling path from the network management entity that is the SMF in Figure 3 to the terminal device 120 may be implemented with so-called session management signaling denoted with P1 in Figure 3. In other words, the network management entity SMF may generate 220 the notification over the session management signaling so that the notification is generated 220 over a mobility management entity of the wireless communication network 110 wherein the mobility management entity may correspond to an Access and Mobility Management Function denoted with AMF in Figure 3. The signaling path from the mobility management entity AMF continues over the radio access network 140 to the terminal device 120 that receives the notification. The other signaling path from the network management entity SMF may be implemented at least in part with a user plane signaling wherein an application server, AS, 150 is utilized. The terminal device 120 is arranged to execute an application software that is configured to interact with the application server, AS, 150. Thus, the signaling path denoted with P2 in Figure 3 goes from the session management entity SMF to a Policy Control Function PCF and therefrom over a Network Data Analytics Function NWDAF and a Network Exposure Function NEF to the application server 150. From the application server 150 the notification is generated, and, thus, delivered, over the user plane signaling over a User Plane Function UPF and the radio access network 140 towards the terminal device 120. Hence, in accordance with various embodiments of the present invention standardized interfaces of the core network 130 may be utilized in the generation 220 of the notification to the terminal device 120.

Moreover, in some embodiments of the invention the notification may be generated 220 so that there is added further data that is received 210 by the network node 600. The further data may e.g. provide details in relation to the power saving mode wherein the details may e.g. define a number of radio frequency bands impacted by that the power saving mode is set. In other words, as the wireless communication network 110 may be set to the power saving mode wherein a utilization of certain radio frequency bands may be prevented in the communication and information on this may be included in the notification for utilizing the information at the terminal device 120.

By reverting back to Figure 2 the method continues so that the terminal device 120 generates an acknowledgement that is received 230 by the network management entity performing the method. The acknowledgement indicates that the terminal device 120 received the notification. The receipt of the notification by the terminal device 120 may cause the terminal device 120 to perform predefined operations, such as to activate an indication for the user of the terminal device 120 on that the wireless communication network 110 provides service in a power saving mode, at least in part, and that it affects the terminal device 120. The indication may e.g. be an icon output on a display of the terminal device 120, or any similar indicator output in any applicable manner, such as a sound, haptic feedback, and/or any combination of these. Moreover, the receipt of the notification by the terminal device 120 may also cause an adjustment of functionalities in the terminal device 120 e.g. with respect to one or more applications executed by the terminal device 120 wherein the adjustment may e.g. relate to an optimization of data traffic e.g. in terms of allowable radio bands and so on.

The network management entity is further configured to, as a step of the method, to store 240 data identifying the terminal device 120 that acknowledged the receipt of the notification. The storing 240 of data may be performed to data storage arranged to be accessible by the network management entity. The data identifying the terminal device may e.g. correspond to a subscription identifier assigned to the terminal device 120 e.g. in a form of IMSI (International Mobile Subscriber Identity) or MSISDN (Mobile Station International Subscriber Directory Number).

In accordance with the above-described method a user of the terminal device 120 being served by at least the portion of the wireless communication network 110 that is set to the power saving mode receives the information on the state of the network and, thus, the user may even take the state into account in her/his use of the terminal device 120 and applications therein. Furthermore, the adjustment of the functionality of the terminal device 120 in the described manner may help saving energy in the terminal device end as some of the application may e.g. be closed down in response to the receipt of the notification. Generally speaking, an improved user experience may be provided to the users being affected. From the network point of view utilization of the power saving mode a power consumption of the network may be improved e.g. in accordance with a use level of the network, or a portion of it. As a result, costs of running the network may be reduced, but at the same time the user experience may be kept on an acceptable level.

At some point the portion of the wireless communication network 110 set to the power saving mode is returned to so-called normal mode, i.e. the operations applied to save power in the wireless communication network 110 are canceled, and the normal power consumption mode, i.e. the normal mode, is resumed. The network management entity, such as the SMF, may receive the information on that the portion of the wireless communication network 110 is resumed to the normal power consumption mode. The information may be received from an entity that is configured to control the power consumption in various portions of the network. In case the entity is the network management entity the data indicative of the resumption of the normal power consumption mode is received as an internal operation within the respective entity. A triggering factor of the resumption may e.g. be a manually given instruction by a human operator of the network. Alternatively or in addition, the triggering factor may be set as a criteria and related to a number of events of the wireless communication network 110. An advantageous criterion may be a number of terminal devices 120 served by the portion of the wireless communication network set to the power saving mode. In other words, there may be set a limit to the number of the terminal devices 120 that are served with the power saving mode. In case the limit is exceeded, the resumption of the wireless communication network 110 to the normal power consumption mode is triggered. Hence, it may be that that reason for setting a portion of the wireless communication network 110, such as a number of RAN nodes 150, to the power saving mode is that it is serving only few, i.e. below a predefined limit, terminal devices 110. At some point new terminal devices 120 may arrive to the service area of the portion of the wireless communication network 110, and the total number of the terminal devices 110 exceed the limit thus triggering the resumption of the normal power consumption mode on which data is received by the network management entity.

Next, it is hereby referred to Figure 4. In accordance with some embodiments of the invention the network management entity may be configured, in response to the above-described operation to resume at least the portion of the wireless communication network 110 to the normal mode, to inquire 410, from the data storage into which such data is stored, data descriptive of terminal devices 110 being affected of setting at least the portion of the wireless communication network 110 to the power saving mode. In other words, information on the terminal devices 110 being affected is inquired 410 from the data storage. In response to the receipt of the information from the data storage the network management entity is configured to generate 420 a resume notification to the terminal device 120 identifiable from the data stored. The same communication paths (cf. P1, P2) may be utilized as in the step 220. In the described manner the one or more terminal devices 120 being affected on the power saving mode may be informed on the changed situation, i.e. the wireless communication network 110 is resumed to the normal mode, and the receipt of the resume notification by the terminal device(s) 120 may cause that this is indicated to the user of the terminal device 120 e.g. by outputting a predefined information to the user. This may e.g. comprise that an icon output on the display of the terminal device 120 and indicating the power saving mode is canceled. In other words, the above-given description and Figure 4 provide further steps of the method in accordance with some example embodiments.

For avoidance of doubt, it is worthwhile mentioning that the generation 220 of the notification by the network management entity to the terminal device(s) 120 as described may be performed continuously which refers to an approach that the notification is generated 220 to terminal devices 120 entering to a location, i.e. the service area, within the wireless communication network 110 that is affected by the power saving mode of at least the portion of the wireless communication network 110. Also the steps of receiving 230 and the step of storing 240 may be performed with respect to such a terminal device entered the service area. In this manner all terminal devices 120 may get the notification. Correspondingly, if a terminal device 120 moves away from the affected location, it may be detected by the network management entity 110 through internal operations in the wireless communication network 110 and it may trigger a generation 420 of the resume notification to the terminal device 120 in question. The internal operations may refer to monitoring the terminal devices 120 with the service area by utilizing the information stored in the data storage and compare it with the terminal device detected to be within the service area in question. Thus, the changes may be detected and the respective terminal devices 120 identified.

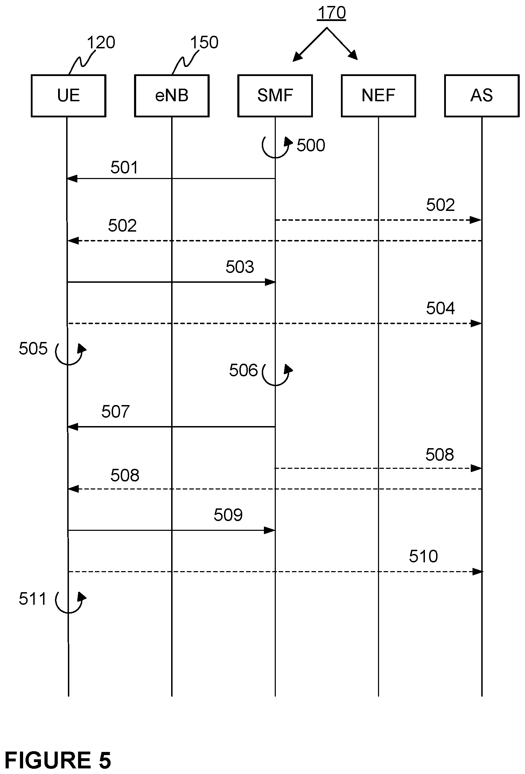

Figure 5 illustrate aspects as described already at least in part in the foregoing description as a flow chart. The flow chart of Figure 5 schematically illustrates signaling/communication between different entities when different signaling paths are applied in the implementation of the invention in 5G network. In the following the flow chart is further described with a non-limiting example of the invention.
A. Under predefined conditions, such as during a period of low traffic the 5G SA network is automatically put into Power Saving Mode (PSM) and this is detected by the network management entity SMF (arrow 500). All applicable terminal devices 120 which are compliant with power saving mode info exchange procedures are notified by generating 220 the notification. In Figure 5 the SMF is used to indicate the network management entity of a core network function that takes care of handling this. Worthwhile to mention is that in practice depending on the particular network implementation also other functions, cf. nodes like PCF may take a part in the activity as a part of the network management entity.
B. Arrow 501: SMF uses the regular signaling (cf. denoted with P1 in Figure 3) interface towards the terminal device 120 via AMF and gNodeB, indicating that PSM is now used. Additional details of PSM, such as which radio band is shut down may also be transmitted. The notification is received by the terminal device 120.
C. Arrow 502: SMF uses new interface and signaling path (cf. denoted with P2 in Figure 3) towards the terminal device 120. At least NEF may be involved in this process, potentially also other nodes such as PCF and NWDAF. In practice a RESTful API between NEF and application server 150 (AS) may be used to rely PSM information on behalf of SMF, application server 150 then changes that info into an application specific format which is sent to the terminal device 120, and an application executed therein.
D. Arrows 503 and 504: The terminal device 120 acknowledges the network, i.e. to the SMF that it has received the PSM related info, using one of the interfaces as described above in points B and C. Worthwhile to mention is that the SMF may receive/obtain the acknowledgement from the application server.
E. The terminal device 120 utilizes the info about PSM on OS and/or application layer. For example, the "5G" radio network indicator in the display may be changed to indicate that the network is in at least in part in the power saving mode and the user should not expect the full 5G experience right now. Another example is informing applications running in the UE about this, apps could then use the information e.g. automatically downgrade the bandwidth they are using, reduce the amount of signaling and stop any background activity like downloads and mail fetch, and so on. This phase is indicated with the arrow 505 in Figure 5.
F. Sometime later the 5G SA network is ordered to resume the normal operation, for example by an Al functionality in SMF analyzing the amount of traffic which looks to be rapidly raising. In other words, the SMF receives information on the resumption (arrow 506 in Figure 5).
G. SMF informs all terminal devices 120 being affected on the resumption (arrows 507 and 508) by using the applied signaling path. This may e.g. cause a removal of the PSM related restrictions, e.g. using the same mechanisms mentioned above.
H. The terminal device 120 acknowledges that it has received the PSM related info (cf. resume notification). This is indicated with arrows 509 and 510 in Figure 5).

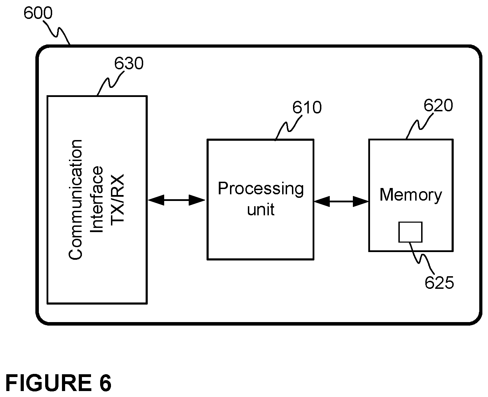

Figure 6 illustrates an example of a system 600 in a form of an apparatus suitable to implement the function of the network node of the wireless communication network, like the network management entity, such as the SMF as referred in the foregoing description. In other words, the system may be configured to implement at least part of the method as described. The execution of the respective method, or at least some portions of it, may be achieved by arranging a processing unit 610 comprising at least one processor to execute at least some portion of computer program code 625 stored in at least one memory 620 causing the processor 610, and, thus, the apparatus forming the system 600 to implement the method steps as described in order to execute the function as described. In other words, the processing unit 610 may be arranged to access the memory 620 and to retrieve and to store any information therefrom and thereto. Moreover, the processing unit 610 may be configured to control a communication through one or more communication interfaces 630 for accessing the other entities being involved in the operation, such as the other nodes/devices in a manner as described in the description herein. Hence, the communication interface 630 may be arranged to implement, possibly under control of the processing unit 610, a number of communication and signaling protocols, such as an IP or any other communication protocol, for communicating with one or more entities to receive input and to output data as described. The term communication interface 630 shall be understood in a broad manner comprising necessary hardware and software elements for implementing the communication techniques. Further, the system in question may comprise one or more input/output devices for inputting and outputting information. In accordance with the present invention such input/output devices forming a user interface may at least comprise a touch screen, but may also comprise further entities, such as a physical keyboard, buttons, display, loudspeaker, microphone camera and so on. In some implementation of the apparatus at least some of the input/output devices may be external to the apparatus and coupled to it either wirelessly or in a wired manner. For sake of clarity, the processing unit 610 herein refers to any unit or a plurality of units suitable for processing information and controlling the operation of the apparatus in general at least in part, among other tasks. The operations mentioned may e.g. be implemented with a microcontroller solution with embedded software. Similarly, the invention is not limited to a certain type of memory 620, but any memory unit or a plurality of memory units suitable for storing the described pieces of information, such as portions of computer program code and/or parameters, may be applied in the context of the present invention. Moreover, at least the mentioned entities may be arranged to be at least communicatively coupled to each other with an internal data connection, such as with a data bus.

In some examples, the system may be implemented with a distributed computing environment in which a plurality of computing devices is configured to cooperate to cause an execution of the method according to at least one of the examples as described. A non-limiting example of such a distributed computing system may be that a first apparatus is configured to perform one or more steps of the respective method, and a second apparatus, and any further apparatuses, in turn, may be configured to perform the remaining steps needed to complete operation as described.

As derivable from above, some aspects of the present invention may relate to a computer program product which, when executed by at least one processor, cause an apparatus to perform at least some portions of the method as described. For example, the computer program product may comprise at least one computer-readable non-transitory medium having the computer program code 425 stored thereon. The computer-readable non-transitory medium may comprise a memory device or a record medium such as a CD-ROM, a DVD, a Blu-ray disc, or another article of manufacture that tangibly embodies the computer program. As another example, the computer program may be provided as a signal configured to reliably transfer the computer program.

Still further, the computer program code 625 may comprise a proprietary application, such as computer program code for generating the data record in the manner as described.

The computer program code 625 may also be considered to include the definitions and instructions of an execution of the application of the data record in a further use.

In the description above it is primarily referred to an implementation of the present invention in a wireless communication network based on 5G technology. However, the inventive idea is not limited to that network technology only, i.e. it may e.g. be implemented to a network implementing 4G technology wherein the network management entity configured to execute the method may be the mobility management entity (MME). Also other network technologies may apply the present invention.

The specific examples provided in the description given above should not be construed as limiting the applicability and/or the interpretation of the appended claims. Lists and groups of examples provided in the description given above are not exhaustive unless otherwise explicitly stated.

## Claims

1. A method for managing a terminal device (120) in a wireless communication network (110), the method performed by a network node (600) of the wireless communication network (110), comprises:
receiving (210) data indicative of that at least a portion of the wireless communication network (110) is set to apply a power saving mode,
generating (220) a notification to a terminal device (120) served at least in part by at least the portion of the wireless communication network (110),
the notification comprising data indicative of that at least the portion of the wireless communication network (110) is set to apply the power saving mode,
receiving (230) an acknowledgement from the terminal device (120), the terminal device (120) acknowledging a receipt of the notification,
storing (240) data identifying the terminal device (120) that acknowledged the receipt of the notification, the data is stored to data storage.

2. The method according to claim 1, wherein the notification to the terminal device (120) is generated (220) with at least one the following: a session management signaling; a user plane signaling.

3. The method according to claim 2, wherein the session management signaling is generated over a mobility management entity of the wireless communication network (110).

4. The method according to claim 2, wherein the user plane signaling is generated through an application server (150) communicatively connected to the wireless communication network (110).

5. The method according to claim 4, wherein data descriptive of the power saving mode applied in the at least portion of the wireless communication network (110) is provided to the application server (150) through a network exposure entity.

6. The method according to any of the preceding claims, the method further comprising:
inquiring (410), from the data storage, in response to receiving data indicative of that at least the portion of the wireless communication network (110) is set to apply a normal power consumption mode, data descriptive of terminal devices (120) being affected of setting at least the portion of the wireless communication network (110) to the power saving mode.

7. The method according to claim 6, the method further comprising:
generating (420), in response to receiving data indicative of that at least the portion of the wireless communication network (110) is resumed to the normal power consumption mode from the power saving mode, a resume notification to the terminal device (120) identifiable from the data stored.

8. The method according to any of the preceding claims, wherein the notification is generated (220) by adding further data in the notification received (210) by the network node (600), the further data defining a number of radio frequency bands impacted by the power saving mode.

9. The method according to any of the preceding claims, the method further comprising:
detecting that a terminal device (120) enters a service area of the wireless communication network (110) being affected by the setting of at least the portion of the wireless communication network (110) to the power saving mode, and
performing the step of generating (220), the step of receiving (230) and the step of storing (240) of the claim 1 with respect to the terminal device (120) detected to enter the service area.

10. The method according to any of the preceding claims, the method further comprising:
detecting that the terminal device (120) identified in the data storage exits the service area of the wireless communication network (110) being affected by the setting of at least the portion of the wireless communication network (110) to the power saving mode, and
generating a resume notification to the terminal device (120) detected to be exited the service area.

11. A network node (600) for managing a terminal device (120) in a wireless communication network (110), the network node (600) of the wireless communication network (110) is configured to execute the steps of the method claim 1.

12. A computer program comprising instructions to cause the network node (600) of claim 11 to execute the steps of the method of claim 1.
